(19) Europäisches Patentamt
European Patent Office
Office européen des brevets

(11) **EP 4 400 619 A1**

(12) **EUROPEAN PATENT APPLICATION**
published in accordance with Art. 153(4) EPC

(43) Date of publication:
**17.07.2024 Bulletin 2024/29**

(21) Application number: **22867173.1**

(22) Date of filing: **22.08.2022**

(51) International Patent Classification (IPC):
*C22C 5/04* (2006.01)          *B01D 53/22* (2006.01)
*B01D 69/02* (2006.01)         *B01D 69/10* (2006.01)
*B01D 69/12* (2006.01)         *B01D 71/02* (2006.01)
*C01B 3/56* (2006.01)          *C22F 1/00* (2006.01)
*C22F 1/14* (2006.01)          *H01M 8/0612* (2016.01)
*H01M 8/0662* (2016.01)

(52) Cooperative Patent Classification (CPC):
**B01D 53/22; B01D 69/02; B01D 69/10;
B01D 69/12; B01D 71/02; C01B 3/56; C22C 5/04;
C22F 1/00; C22F 1/14; H01M 8/0612;
H01M 8/0662;** Y02E 60/50

(86) International application number:
**PCT/JP2022/031476**

(87) International publication number:
**WO 2023/037851 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.09.2021 JP 2021147050**

(71) Applicant: **Tanaka Kikinzoku Kogyo K.K.
Tokyo 100-6422 (JP)**

(72) Inventors:
• **HORIKAWA, Daisuke
  Isehara-shi, Kanagawa 259-1146 (JP)**
• **MATSUMURA, Toru
  Isehara-shi, Kanagawa 259-1146 (JP)**
• **EBISUGI, Masato
  Isehara-shi, Kanagawa 259-1146 (JP)**
• **KUBOTA, Shuichi
  Isehara-shi, Kanagawa 259-1146 (JP)**

(74) Representative: **Weickmann & Weickmann
PartmbB
Postfach 860 820
81635 München (DE)**

(54) **HYDROGEN PERMEABLE MEMBRANE FORMED OF PDCU ALLOY, AND HYDROGEN PURIFICATION METHOD BY MEANS OF HYDROGEN PERMEABLE MEMBRANE**

(57)    The present invention relates to a hydrogen permeable membrane that includes a PdCu alloy and can be used for hydrogen purification. The hydrogen permeable membrane includes 38.75 mass% or more and 39.5 mass% or less of Cu with the balance being Pd and inevitable impurities as the PdCu alloy, and the area percentage of a β phase on an arbitrary cross section is 95% or more. The hydrogen permeable membrane of the present invention has a hydrogen permeability coefficient $\phi$ of $2.0 \times 10^{-8}$ mol/m·S·Pa$^{1/2}$ or more at any temperature in a temperature range of 150°C or higher and 350°C or lower. This value exceeds the hydrogen permeability coefficient of a PdCu alloy membrane containing Cu concentration of 40 mass%, which has been thus far considered to be optimal, demonstrating that the present invention is excellent in terms of hydrogen permeability.

Fig. 8

EP 4 400 619 A1

**Description**

BACKGROUND OF THE INVENTION

FIELD OF THE INVENTION

The present invention relates to a hydrogen permeable membrane that selectively transmits hydrogen from a gas containing hydrogen and particularly to a hydrogen permeable membrane having improved hydrogen permeability compared with conventionally known PdCu alloys.

DESCRIPTION OF THE RELATED ART

Hydrogen gas is in wide use in a variety of fields such as hydrogen addition sources or reducing agents in the synthesis processes of a variety of compounds. Recently, the use of hydrogen as renewable new energy has been being expected due to environmental issues or energy issues that are becoming more serious. For example, efforts are underway to develop hydrogen engines that are driven using hydrogen as a direct fuel, fuel cells that generate power using hydrogen as a fuel and the like and put them into practical use. In addition, there is a need to produce and supply hydrogen efficiently and safely in order to use hydrogen effectively as energy sources.

Although a variety of methods are known as a method for industrially producing hydrogen gas, all require purification of produced hydrogen gas. For example, in a steam reforming method of an organic fuel such as hydrocarbon, which is gaining attention as a method for producing hydrogen gas for a fuel cell, reformed gas to be produced contains not only hydrogen, which is a main component, but also carbon monoxide, carbon dioxide and the like. These impurities cause deterioration of a catalyst constituting a fuel cell electrode, and there is thus a need to purify the reformed gas before use to increase the purity of hydrogen. As this hydrogen purification method, a hydrogen permeable membrane method in which a hydrogen permeable membrane including an alloy having hydrogen permeability is used has been put into practical use. Hydrogen purification using an alloy membrane makes it possible to purify, for example, hydrogen having a purity of 99% to have a purity of 99.99% or higher and is suitable for the purification of high-purity hydrogen for a fuel cell or the like.

In addition, as alloy membranes constituting the hydrogen permeable membrane, PdAg-based alloys for which the selective hydrogen permeability of palladium (Pd) is used or Pd alloy membranes including a PdCu-based alloy or the like are known. Particularly, for hydrogen permeable membranes including a PdCu-based alloy, hydrogen embrittlement or a corrosion resistance-related problem is not that serious, and thus efforts are underway to put the hydrogen permeable membranes into practical use (Patent Documents 1 and 2 and Non Patent Document 1).

Prior Art Document

Patent Document

Patent Document 1
Japanese Patent Application Laid-Open No. 2001-262252
Patent Document 2
Japanese Patent Application Laid-Open No. 2008-12495

Non Patent Document

Non Patent Document 1
James Raphael Warren, "The Effect of Hydrogen on Palladium-Copper Based Membranes for Hydrogen Purification", THE UNIVERSITY OF BIRMINGHAM, pp. 22 to 29 and 37 to 80

SUMMARY OF THE INVENTION

Problem to be Solved by the Invention

The hydrogen permeability of a PdCu alloy membrane is exhibited in a $\beta$-phase state of a bcc-based B2 structure. In the above Pd-based alloy, an added element such as Cu has an action of accelerating the phase transformation of an $\alpha$ phase of the Pd alloy into a $\beta$ phase. In addition, the added element such as Cu also becomes necessary from the viewpoint of curbing a decrease in the strength of the alloy membrane caused by hydrogen embrittlement. Each of the above-listed prior art documents discloses PdCu-based alloys having a wide range of Cu concentrations; however, according to Non Patent Document 1, a hydrogen permeable membrane including a PdCu alloy having a Cu concentration of 40 mass% is considered to have the highest hydrogen permeability.

However, according to the present inventors' studies, it is considered that there is room for improvement in hydrogen permeability in hydrogen permeable membranes including a PdCu-based alloy. In addition, as described above, hydrogen is expected to be more widely used as a variety of energy sources, and there is a demand for additional improvement in purification capability for the effective use of hydrogen. The present invention has been made based on such a background, and an objective of the present invention is to provide a hydrogen permeable membrane for producing and purifying hydrogen that has superior hydrogen permeability to conventional PdCu alloy membranes.

Solution to Problem

In order to discover a hydrogen permeable membrane having higher hydrogen permeability, the present inventors tried to make not only the composition but also the configuration on the alloy membrane cross section suitable while maintaining a PdCu alloy as the basic. As described above, in the PdCu alloy, an increase in the Cu concentration accelerates phase transformation into a β phase. However, the hydrogen permeation capability of Pd alloys is assumed by Pd, and it is considered that, when the hydrogen permeability is prioritized, it is preferable to increase the Pd concentration in the β phase as much as possible. That is, for improvement in the composition aspect of the PdCu alloy, a suitable range is considered to be present based on the balance between the possibility of the phase transformation into a β phase and the securement of the hydrogen permeability.

In addition, the hydrogen permeable membrane selectively removes hydrogen when a hydrogen-mixed gas, which is a treatment object, is transmitted from one surface to the other surface. When this mechanism of action is taken into account, it is deemed that the cross-sectional configuration of the membrane also needs to be studied. If the hydrogen permeation capability relies on the β phase in the PdCu alloy, it is deemed that there is a need to increase the occupancy of the β phase on the cross section of the hydron permeable membrane.

Based on these considerations, the present inventors have reevaluated both the alloy composition and a treatment for effectively causing the phase transformation on the cross section for PdCu alloy membranes. As a result, the present inventors have found that a PdCu alloy membrane exhibiting suitable hydrogen permeation performance can be obtained by applying a PdCu alloy having a different composition range from the PdCu alloy having a Cu concentration of 40 mass%, which has been conventionally considered to be optimal, and performing a thermal treatment at a low temperature under a pressurized hydrogen atmosphere that have not been found in the related art. This new PdCu alloy membrane is capable of exhibiting clearly suitable hydrogen permeability compared with the PdCu alloy having a Cu concentration of 40 mass%, which has been thus far considered to be optimal.

That is, the present invention that solves the above-described problem is a hydrogen permeable membrane including a PdCu alloy, in which the PdCu alloy includes 38.75 mass% or more and 39.50 mass% or less of Cu with the balance being Pd and inevitable impurities and an area percentage of a β phase on an arbitrary cross section is 95% or more. Hereinafter, the configuration of the hydrogen permeable membrane of the present invention and a production method will be described in detail.

(A) Configuration of Hydrogen Permeable Membrane of Present Invention

(A-1) Alloy Composition

The hydrogen permeable membrane of the present invention is composed of a binary PdCu alloy including Pd and Cu except an inevitable impurity to be described below. As PdCu-based alloy membranes having hydrogen permeability, alloy membranes including an added element other than Cu are known as in the above-described prior art. In the present invention, since intentional addition of an added element other than Cu creates a concern of the deterioration of hydrogen permeability due to a decrease in the Pd concentration, the binary alloy is employed to prevent such a concern. In addition, in the present invention, an alloy membrane of a PdCu alloy having a Cu concentration of 38.75 mass% or higher and 39.50 mass% or lower is applied. The PdCu alloy membrane of the present invention has a Pd concentration that is approximately 1 mass% higher than that of a PdCu alloy membrane (having a Cu concentration of 40 mass%), which has been conventionally considered to be optimal.

The reason for the Cu concentration to be set to 38.75 mass% or higher and 39.50 mass% or lower is to enable the phase transformation of the PdCu alloy into a β phase and to secure suitable hydrogen permeability. When the Cu concentration is lower than 38.75 mass%, development of the β phase becomes difficult, and it becomes difficult to develop a sufficient amount of the β phase even by a thermal treatment to be described below. When the Cu concentration exceeds 39.50 mass%, the hydrogen permeability deteriorates and becomes a performance that is not significantly different from that in the related art. That is, when the Cu concentration is not within the above-described range, the alloy membrane has insufficient hydrogen permeability. The Cu concentration is particularly preferably set to 38.80 mass% or higher and 39.20 mass% or lower.

The PdCu alloy membrane of the present invention is composed of Pd and Cu and does not include any other intentional added elements, but an inevitable impurity may be contained. Examples of the inevitable impurity include Al, Fe, Pt and the like. The total amount of these is preferably set to 500 ppm or less.

(A-2) Cross-Sectional Configuration of Alloy Membrane

In the present invention, the area percentage of the β phase on an arbitrary cross section of the alloy membrane including the PdCu alloy becomes 95% or more. As described above, the hydrogen permeation capability of the PdCu alloy develops in a β-phase state, and it is deemed that the proportion of the β phase on the alloy membrane cross section needs to be high to secure the hydrogen permeation capability of the alloy membrane. In the present invention, the hydrogen permeability is secured by strictly regulating the proportion of the β phase on the alloy membrane cross section. In addition, in the present invention, as the alloy membrane having suitable hydrogen permeability, the area percentage of the β phase on an arbitrary cross section is set to 95% or more. The arbitrary cross section means that the above-described condition is met in any arbitrarily-selected cross section of the PdCu alloy membrane regardless of the direction. The area percentage is supposed to be calculated from the area of the β phase with respect to the total area of an observation region after cross-sectional observation is performed on a region where both surfaces (both front and rear ends) of the PdCu alloy membrane can be viewed as the observation region. Regarding the observation region, a range including the both front and rear ends of the PdCu alloy membrane and including a width that is 10 times or more longer than the film thickness is preferably set as the observation region. The area percentage of the β phase on this arbitrary cross section is more preferably 98% or more, and the upper limit of the area percentage of the β phase is preferably set to 100%.

As a method for detecting the β phase on the arbitrary cross section of the PdCu alloy membrane, analysis by electron backscattered diffraction (EBSD) is effective. In EBSD, information can be acquired per crystal grain on the alloy membrane cross section, which makes it possible to measure and calculate the distribution and area percentage of the β phase on the alloy membrane cross section.

(A-2) Film Thickness and Hydrogen Permeability of Alloy Membrane

The film thickness of the PdCu alloy membrane constituting the hydrogen permeable membrane of the present invention is preferably 1 μm or more and 250 μm or less. When the film thickness is less than 1 μm, the mechanical strength is insufficient, and there is a difficulty with handleability. In addition, when the film thickness exceeds 250 μm, the hydrogen permeation amount becomes small, and the purification efficiency thus decreases. Regarding the shape of the PdCu membrane of the present invention, there is no limitation.

The hydrogen permeable membrane of the present invention is excellent in terms of hydrogen permeability compared with the related art. Specifically, the hydrogen permeable membrane is capable of exhibiting a hydrogen permeability coefficient $\phi$ of $2.0 \times 10^{-8}$ mol/m·S·Pa$^{1/2}$ or more at any temperature in a temperature range of 150°C or higher and 350°C or lower. This hydrogen permeability coefficient $\phi$ becomes 1.2 times or more the hydrogen permeability coefficient of the PdCu alloy membrane having a Cu concentration of 40 mass%, which has been thus far considered to be optimal, that is measured under the same conditions. The hydrogen permeability coefficient $\phi$ is calculated from the following equation.

[Math 1]

$$ J = \frac{\phi}{l}\left(\sqrt{P_f} - \sqrt{P_p}\right) $$

J: Permeation flow rate, $\phi$: Permeability coefficient
l: Film thickness, $P_{in}$: Supply pressure, $P_{out}$: Permeation pressure

(B) Method for Producing Hydrogen Permeable Membrane of Present Invention

The hydrogen permeable membrane of the present invention can be produced by providing a PdCu alloy membrane having the above-described composition and thermally treating this alloy membrane under predetermined conditions. A method for producing the PdCu alloy membrane can be selected as appropriate depending on the film thickness, dimension or the like thereof and is not particularly limited. For a thin film-like PdCu alloy membrane, a variety of thin film formation processes such as a sputtering method, a vacuum deposition method, a chemical deposition method and a plating method can be used. In addition, a plate-like or foil-like PdCu alloy membrane can be produced by rolling an alloy lump (ingot).

In the production of the PdCu alloy membrane by a rolling method, a PdCu alloy ingot is produced by a melting casting method, and this ingot is processed by an appropriate combination of hot forging, hot rolling, cold rolling and the like, whereby an alloy membrane having a predetermined thickness can be produced. Regarding a step of processing the ingot into the alloy membrane, there is no particular limitation. However, in PdCu alloys, since introduction of processing strain may accelerate the phase transformation into the β phase, it is preferable to produce the PdCu alloy membrane by performing cold working at a reduction ratio of 65% or higher and 85% or lower as the final processing step.

In addition, PdCu alloy membranes having a Cu concentration of 38.75 mass% or higher and 39.5 mass% or lower produced by a variety of production methods exhibit the phase transformation into a β phase by being thermally treated within a predetermined temperature range. This thermal treatment temperature is set to 275°C or higher and 350°C or lower. The phase transformation temperature (α phase → β phase) within the above-described composition range is presumed to be near approximately 300°C. A thermal treatment at lower than 275°C does not cause the phase transformation into a β phase or makes it difficult to achieve an area percentage of the β phase on the membrane cross section of 95% or more. Incidentally, it is known that the β phase decomposes into the α phase at high temperatures. In the PdCu alloy in the present invention, the β phase is liable to decompose at higher than 350°C. In the present invention, there is a need to achieve an area percentage of the β phase on an arbitrary cross section of the alloy membrane of 95% or more, and there is a need to perform a thermal treatment at 350°C or lower to secure the above-described area percentage without causing the decomposition of the β phase.

As the atmosphere of the thermal treatment for the phase transformation into a β phase, a pressurized hydrogen-containing atmosphere is preferable. It is more preferable to set the hydrogen partial pressure in the atmosphere to 0.05 MPG or higher and 1.0 MPaG or lower.

The thermal treatment time is adjusted depending on the film thickness of the PdCu alloy membrane. The generation of a β phase by the thermal treatment proceeds from both surfaces of the PdCu alloy membrane, and phase transformation in the membrane progresses with the treatment time. In the present invention, since there is a need to increase the area percentage of the β phase on the cross section of the PdCu alloy membrane, a thermal treatment time that is long enough for phase transformation to occur even inside is secured in consideration of the film thickness. For a PdCu alloy membrane having a film thickness within the above-described suitable range, the treatment time is preferably set to five hours or longer. When the thermal treatment is performed within the above-described temperature range, since the β phase is less likely to decompose, there is no problem in setting the treatment time to a long time.

(C) Method for Purifying Hydrogen and Hydrogen Purification Apparatus with Hydrogen Permeable Membrane of Present Invention

The hydrogen permeable membrane of the present invention is capable of purifying hydrogen by selectively transmitting hydrogen from a gas containing hydrogen (feed). That is, a method for purifying hydrogen of the present invention is a method for purifying hydrogen by transmitting a gas containing hydrogen through a hydrogen permeable membrane, in which the hydrogen permeable membrane is the hydrogen permeable membrane of the present invention, and the gas is transmitted through the hydrogen permeable membrane with the treatment temperature set to 100°C or higher and 375°C or lower.

Since the hydrogen permeability coefficient of the PdCu alloy membrane relies on temperatures, there is a need to set the treatment temperature with the hydrogen permeable membrane (a temperature at which the membrane is used) to be appropriate. In the method for purifying hydrogen with the PdCu alloy membrane having a Cu concentration of 38.75 mass% or higher and 39.5 mass% or lower in the present invention, a suitable treatment temperature is 100°C or higher and 375°C or lower. Within this temperature range, the PdCu alloy membrane of the present invention is capable of exhibiting a higher hydrogen permeability coefficient against the related art (having a Cu concentration of 40 mass%). In addition, the hydrogen permeable membrane of the present invention is capable of exhibiting the same or higher hydrogen permeability coefficient as or than that of the related art (having a Cu concentration of 40 mass%) in a temperature range of higher than 375°C to approximately 450°C. Since it is concerned that the decomposition of the β phase may occur and the hydrogen permeability coefficient may decrease at temperatures of higher than 375°C, the upper limit of the suitable treatment temperature becomes 375°C. The treatment temperature refers to a temperature in a region where the hydrogen-containing gas, which is the object of the purification treatment, comes into contact with and permeates through. The treatment temperature is adjusted by setting at least any of the temperature of the hydrogen-containing gas, the temperature of the hydrogen permeable membrane and the atmosphere temperature in a hydrogen production (purification) apparatus.

In the purification of the gas containing hydrogen, the gas, which is the treatment object, is supplied to one surface (first side) of the hydrogen permeable membrane. At this time, the pressure on the first side is increased compared with that on the other surface (second side) of the hydrogen permeable membrane, whereby purified hydrogen that has permeated through the hydrogen permeable membrane is extracted. At this time, there is no particular limitation on the pressure difference between the first side and the second side.

In addition, in a step of purifying hydrogen with the PdCu alloy membrane of the present invention, the PdCu alloy membrane that has undergone the thermal treatment for forming the β phase may be used as described above, but the thermal treatment may be performed immediately before the hydrogen purification step. That is, the gas may be transmitted through the hydrogen permeable membrane with the treatment temperature set to 100°C or higher and 375°C or lower after the PdCu alloy membrane including 38.75 mass% or more and 39.5 mass% or less of Cu with the balance being Pd and inevitable impurities is provided, and this PdCu alloy membrane is thermally treated at a temperature of 275°C or higher and 350°C or lower in a hydrogen atmosphere to form the hydrogen permeable membrane.

The above-described hydrogen purification method is performed with the hydrogen purification apparatus to which the hydrogen permeable membrane of the present invention is applied. The main configurations of this hydrogen purification apparatus other than the hydrogen permeable membrane can be the same as those of well-known hydrogen purification apparatuses. At the time of installing the hydrogen permeable membrane in the hydrogen purification apparatus, a gas permeable support may be combined into the hydrogen permeable membrane to compensate for the mechanical strength. As the support, a metal wire mesh, a porous sintered material or the like can be used. Since there are cases where the mechanical strength is secured from the thickness of the hydrogen permeable membrane, the support is not essential.

Advantageous Effect of Invention

As described above, the hydrogen permeable membrane including a PdCu alloy of the present invention strictly regulates the composition range to a Cu concentration of 38.75 mass% or higher and 39.5 mass% or lower and clarifies the optimal β phase area percentage on the cross section of the PdCu alloy membrane. The treatment conditions for forming this β phase are not applicable to the PdCu alloy membrane (having a Cu concentration of 40 mass%), which has been thus far considered to be optimal, and are found in the PdCu alloy membrane having the alloy composition in the present invention. The hydrogen permeable membrane of the present invention has a high hydrogen permeability coefficient compared with the conventional PdCu alloy membrane (having a Cu concentration of 40 mass%).

BRIEF DESCRIPTION OF THE DRAWINGS

Fig. 1 is an XRD diffraction pattern of the surface of a hydrogen permeable membrane (PdCu alloy membrane (including 39 mass% of Cu)) produced at each thermal treatment temperature;
Fig. 2 is an EBSD profile of the cross section of the hydrogen permeable membrane (PdCu alloy membrane (including 39 mass% of Cu)) produced at each thermal treatment temperature;
Fig. 3 is a graph showing the relationship between the thermal treatment temperature of the PdCu alloy membrane (including 39 mass% of Cu) and the area percentage of a β phase on the cross section;
Fig. 4 is a view showing the configuration of an apparatus for measuring the hydrogen permeability coefficient used in each embodiment;
Fig. 5 is a graph showing the measurement results of the hydrogen permeability coefficients of a variety of PdCu alloy membranes (Cu concentration: 37 mass% to 41 mass%, thermal treatment temperature: 400°C);
Fig. 6 is a graph showing the measurement results of the hydrogen permeability coefficients of a variety of PdCu alloy membranes (Cu concentration: 37 mass% to 41 mass%, thermal treatment temperature: 320°C);
Fig. 7 is a graph showing the relationship between the area percentage of a β phase on the cross section and the hydrogen permeability coefficient of the PdCu alloy membrane having a Cu concentration of 39.0 mass%; and
Fig. 8 is a graph showing the measurement result of the hydrogen permeability coefficient at each treatment temperature in hydrogen purification with a PdCu alloy membrane (Cu concentration: 39 mass% or 40 mass%).

DETAILED DESCRIPTION OF THE PREFERRED EMBODIMENTS

First Embodiment: Hereinafter, an embodiment of the present invention will be described. In the present embodiment, PdCu alloy membranes having a Cu concentration of 39.0 mass% (and a Pd concentration of 61.0 mass%) were produced, and these were thermally treated to produce hydrogen permeable membranes. During the process, a plurality of hydrogen permeable membranes was produced by changing the thermal treatment temperature, and the area percentages of a β phase on the cross sections and the hydrogen permeability coefficients were measured.

A PdCu alloy ingot produced by a melting casting method was provided, the ingot surface was ground to be cleaned, and then PdCu alloy membranes were produced by cold rolling. In the processing step, cold rolling was performed a plurality of times while intermediate annealing (600°C to 900°C) was performed, and the reduction ratio in the final rolling was set to 85%, thereby producing PdCu alloy membranes having a thickness of 15 $\mu$m. This PdCu alloy membranes were thermally treated at temperatures of 275°C, 300°C, 350°C and 375°C, and phase transformation into a β phase was accelerated. The thermal treatments were performed under a condition where the PdCu alloy membranes were heated for 24 hours in hydrogen of 0.05 MPaG.

Regarding the PdCu alloy membranes after the thermal treatments, XRD analysis was performed on the surfaces. The XRD analysis was performed with an XRD analyzer (MACScience M03XHF22) using Cu·kα rays as an X-ray source.

In addition, the PdCu alloy membranes produced in the present embodiment were cut, EBSD analysis was performed on the cross sections, and the area percentages of the β phase on the cross sections in observation regions were measured. As a pretreatment t in advance of the EBSD analysis, the specimen cross section was finish-polished until a diamond paste of 0.25 $\mu$m was used, and, furthermore, the surface was milled with an ion milling apparatus (IM4000 manufactured by Hitachi High-Tech Corporation). Regarding the conditions of the ion milling, the surface was milled for 20 minutes under conditions of a stage control of 2F, an acceleration of 0.1 kV, a discharge of 1.5 kV, an ion beam irradiation angle of 70 degrees, an eccentricity of 4 mm and an argon gas flow rate of 0.07 cm$^3$/min.

For the EBSD analysis, ultrahigh resolution analysis scanning electron microscopes (SU-70 manufactured by Hitachi High-Tech Corporation and NORDLYS-MAX 3 manufactured by Oxford Instruments Holdings 2013 Inc.) were used. Regarding the analysis conditions, the pitches were set to 0.2 umm, the pinning mode was set to 4 × 4, the gain was set to 0, the exposure time was set to automatic, EBSD solver was set, the number of bands was set to 12, and the Hough resolution was set to 60. In addition, the analysis was performed on an FCC phase (lattice constant: 3.7653 angstroms) with a reflector 44 and on a B2 phase with a reflector 43. In addition, the area percentage of the β phase (lattice constant: 2.9662 angstroms) was measured with image analysis software provided in the analyzer.

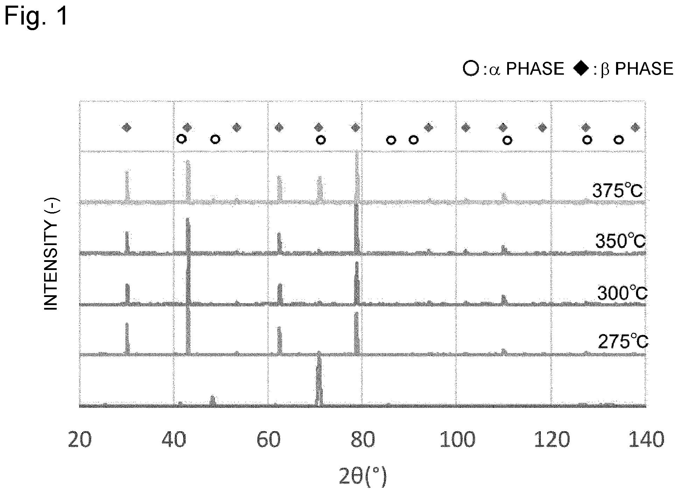

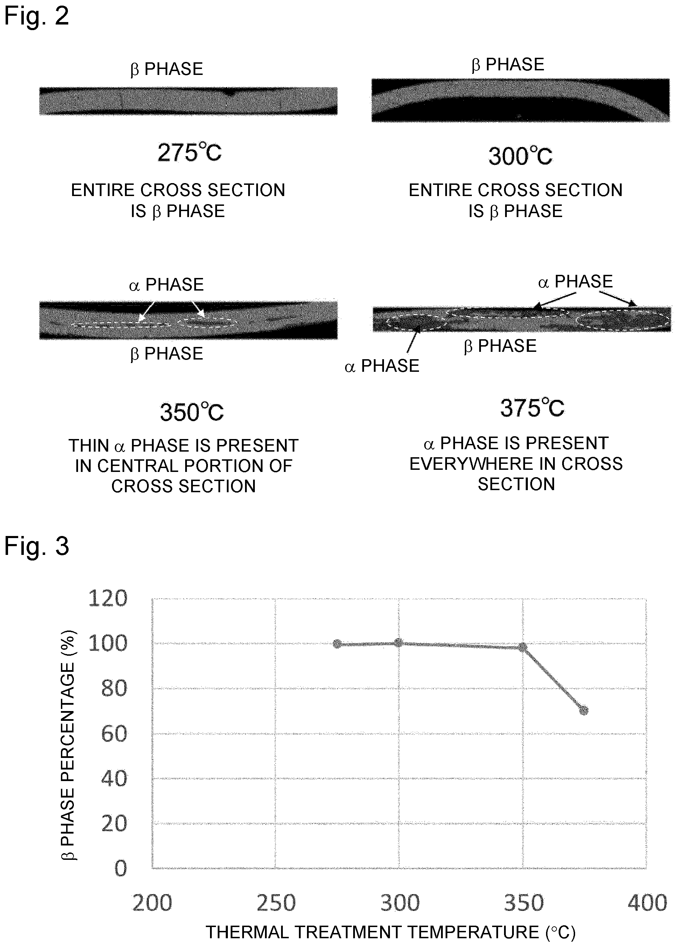

Fig. 1 shows the XRD diffraction pattern of the surface of the hydrogen permeable membrane (PdCu alloy membrane) treated at each thermal treatment temperature. In addition, Fig. 2 shows the result of the EBSD analysis of the cross section of each hydrogen permeable membrane.

When Fig. 1 is referred to, it is possible to presume that, at all of the thermal treatment temperatures, the phase transformation into the β phase was completed and the PdCu alloy membranes were composed of approximately the β phase as long as the presumption was based on the results of the XRD analysis. However, from the results of the EBSD analysis on the PdCu alloy membrane cross sections, it is confirmed that an α phase was generated inside in the case of the thermal treatment at 375°C. In consideration of the fact that the β phase was generated even inside in the case of the thermal treatments at 275°C to 350°C, it is considered that the α phase that was observed in the case of the thermal treatment at 375°C was an untransformed residual α phase or a phase that had been once transformed into a β phase but re-transformed into an α phase at high temperatures. Fig. 3 shows the relationship between the thermal treatment temperature of the PdCu alloy membrane and the area percentage of the β phase on the cross section. In the present embodiment, it was confirmed that the thermal treatments at 275°C to 350°C make the area percentage of the β phase on the membrane cross section be 98% or more.

Next, for the hydrogen permeable membrane (PdCu alloy membrane) produced by the thermal treatment at each temperature, the hydrogen permeability coefficient was measured. A circular piece having a diameter of 21.3 mm was cut out from the produced hydrogen permeable membrane. This hydrogen permeable membrane and a stainless steel wire mesh (diameter: 18.4 mm) were clamped with a gasket for an ICF34 flange to fabricate a sample (effective area: 2.08 cm$^2$). This sample was set in a sample holder. The sample holder is a vacuum container having a first-side (gas supply side) space and a second-side (transmitted gas side) space with respect to the sample (hydrogen permeable membrane) and including a nozzle for gas supply and gas discharge.

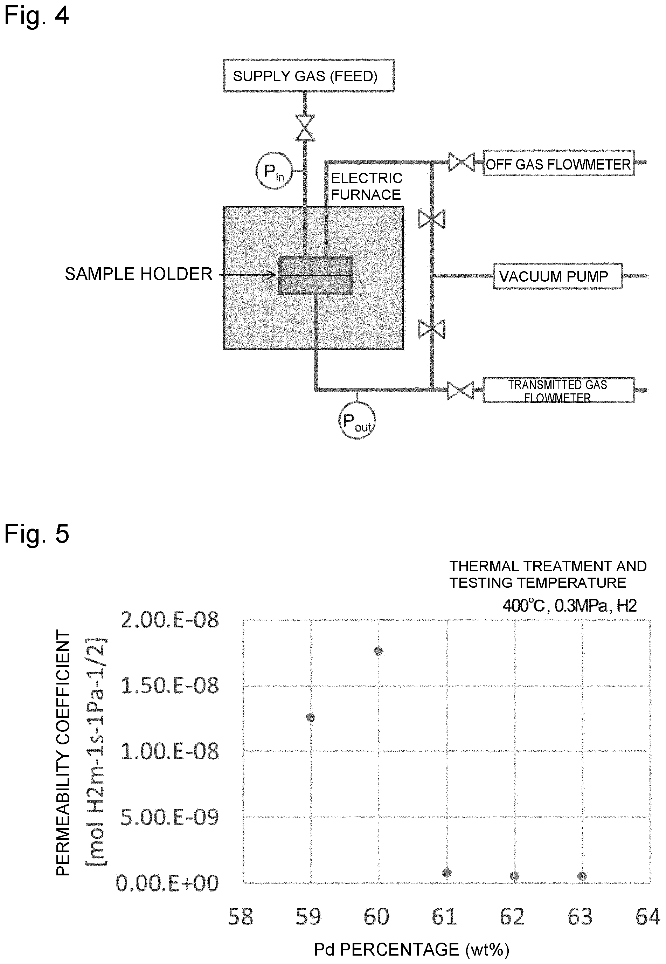

Fig. 4 shows the outline of an apparatus for measuring the hydrogen permeability coefficient. The sample holder configured above was set in an electric furnace and connected to pipes of a vacuum pump and a variety of gas flowmeters. Before measurement, the first side and the second side of the sample holder were evacuated and substituted with hydrogen. Next, the furnace was heated up to a predetermined measurement temperature, and hydrogen of a predetermined pressure was then introduced into the first side of the hydrogen permeable membrane. In addition, the flow rate of hydrogen that had been transmitted to the second side was measured. The permeability coefficient was calculated from the measured flow rate of the transmitted gas (hydrogen), the supply-side pressure, the permeation-side pressure and the film thickness of the hydrogen permeable membrane. Measurement conditions in the present embodiment were set as described below.

· Testing temperature: 320°C
· Supply gas: Hydrogen (hydrogen concentration: 99.99%)

· First-side pressure: 0.05 MPa·G
· Second-side pressure: 0 MPa·G
· Testing time: 2.5 h

The hydrogen permeability coefficients (measurement temperature: 320°C) of the hydrogen permeable membranes including the PdCu alloy produced in the present embodiment (treatment temperatures: 275°C, 300°C, 350°C and 375°C) were as described below.

[Table 1]

| Thermal treatment temperature | Cross sectional β phase area percentage | Hydrogen permeability coefficient ($mol/m \cdot S \cdot Pa^{1/2}$) |
| --- | --- | --- |
| 275°C | 100% | $2.30 \times 10^{-8}$ |
| 300°C | 100% | $2.04 \times 10^{-8}$ |
| 350°C | 98% | $1.78 \times 10^{-8}$ |
| 375°C | 70% | $2.91 \times 10^{-9}$ |

From Table 1, it is confirmed that, for the PdCu alloy membrane (thermal treatment temperature: 375°C) having a low area percentage of the β phase on the membrane cross section, the hydrogen permeability coefficient is significantly low. That is, in order to obtain a PdCu alloy membrane having excellent hydrogen permeability, there is a need to transform the phase into a β phase even in the inside of the membrane.

In addition, when the results of the XRD analysis and the EBSD analysis are collectively taken into account, it is deemed that, at the time of studying the hydrogen permeability of hydrogen permeable membranes including a PdCu alloy membrane, only XRD analysis is not sufficient. In XRD analysis, it is possible to grasp the structure of a measurement object up to a depth of approximately several micrometers from the surface, but it is not possible to measure the internal structure. Regarding this point, in conventional study examples including Non Patent Document 1, XRD analysis has been mainly used for the structural analysis of hydrogen permeable membranes. However, it is considered that only XRD analysis is not sufficient to evaluate the true characteristics of PdCu alloy membranes.

Second Embodiment: In the present embodiment, PdCu alloy membranes having a different Cu concentration were produced, and the relationship between the Cu concentration (Pd concentration) and the hydrogen permeability coefficient was studied. Here, comparison was made against a PdCu alloy membrane having a Cu concentration of 40.0 mass% (and a Pd concentration of 60.0 mass%), which is the related art, and comparison was also made against hydrogen permeation capability in the related art.

The PdCu alloy membranes were produced in the same manner as in First Embodiment, and PdCu alloy membranes having a Cu concentration of 37 mass% to 41 mass% (a Pd concentration of 59 mass% to 63 mass%) were produced by adjusting the composition of the alloy ingot.

In the present embodiment, in the beginning, a study mainly intending to confirm the hydrogen permeability on the occasion of applying the optimal thermal treatment temperature to a PdCu alloy membrane having a Cu concentration of 40.0 mass% (and a Pd concentration of 60.0 mass%), which is the related art, was performed as a preliminary study. According to Non Patent Document 1 or the like, the PdCu alloy membrane having a Cu concentration of 40.0 mass% exhibits the optimal hydrogen permeability with a thermal treatment at 400°C, and the thermal treatment temperature was thus set to 400°C.

In addition, in the present embodiment, a sample was fabricated by processing the produced PdCu alloy membrane into the same shape as in First Embodiment without performing the thermal treatment, and the sample was set in the apparatus for measuring the hydrogen permeability coefficient. In addition, after the same setting before measurement as in First Embodiment was performed, the electric furnace was heated to 400°C, which is a thermal treatment temperature for β phase transformation, and a hydrogen gas was introduced thereinto (primary pressure of 0.3 MPa) at the same time as the beginning of the heating. In the PdCu alloy membrane, phase transformation into a β phase progresses from the beginning of this heating. Along with the phase transformation into a β phase, the hydrogen flow rate, which is measured with a transmitted gas flowmeter, increases. In addition, the hydrogen permeability coefficient was measured in a state where the flow rate of the transmitted hydrogen had been stabilized. Other measurement conditions were set to be the same as in First Embodiment.

The measurement results of the hydrogen permeability coefficients of the variety of PdCu alloy membranes (having a Cu concentration of 37 mass% to 41 mass%) at the time of setting the thermal treatment temperature for β phase transformation to 400°C are shown in Fig. 5. From Fig. 5, it was confirmed that the PdCu alloy membrane having a Cu concentration of 40.0 mass% (and a Pd concentration of 60.0 mass%) exhibited the maximum hydrogen permeability coefficient with the thermal treatment at 400°C. This result is deemed to match the results of conventional report examples.

Meanwhile, in the case of the PdCu alloy membranes having a Cu concentration of 39 mass% or lower (First Embodiment), the hydrogen permeability coefficients became extremely low with the thermal treatment at 400°C. As confirmed in First Embodiment, in the PdCu alloy membrane having a Cu concentration of 39 mass%, it is considered that an untransformed residual $\alpha$ phase remained or a phase that had been once transformed into a $\beta$ phase was re-transformed into an $\alpha$ phase at high temperatures in the case of the thermal treatment at 400°C, which is deemed to match this result.

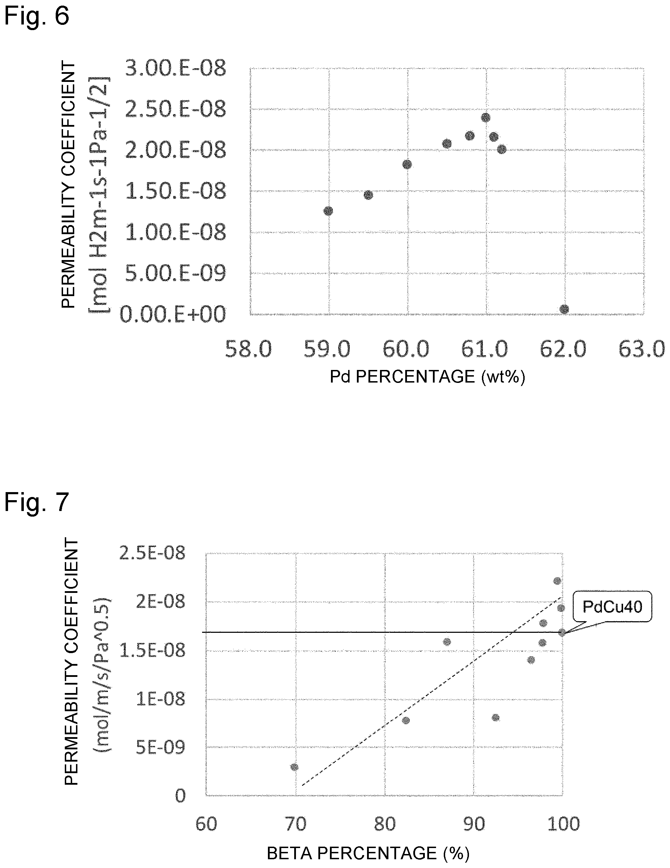

Therefore, each PdCu alloy membrane was thermally treated with the thermal treatment temperature set to 320°C, and the hydrogen permeability coefficient thereof was measured. In this study, the PdCu alloy membranes that had not been thermally treated in the same manner as described above were set in the measurement apparatus and thermally treated. First, the heating temperature was set to 320°C, the PdCu alloy membranes were heated, and a hydrogen gas was introduced thereinto. The PdCu alloy membranes were heated at 320°C until the transmitted hydrogen flow rates were stabilized, and, once the stabilization of the flow rates was confirmed, the PdCu alloy membranes were heated to 400°C, and the hydrogen permeability coefficients were measured. These results are shown in Fig. 6.

From Fig. 6, it is found that, when the thermal treatment temperature is set to 320°C, clear hydrogen permeability develops in the PdCu alloy membrane having a Cu concentration of 39.0 mass% (and a Pd concentration of 61.0 mass%). Within a Cu concentration range of 41 mass% to 39 mass% (and a Pd concentration range of 59 mass% to 61 mass%), the hydrogen permeability coefficient increases with an increase in the Pd concentration. In addition, it is found that the maximum value of the hydrogen permeability coefficients appears from the PdCu alloy membrane having a Cu concentration of 39.0 mass% (and a Pd concentration of 61.0 mass%) and becomes 1.3 times higher than the value of the related art. The hydrogen permeability coefficient of the PdCu alloy membrane having a Cu concentration of 39.0 mass% is still, similarly, a high value compared with the hydrogen permeability coefficient of the PdCu alloy membrane having a Cu concentration of 40.0 mass% that was thermally treated at 400°C.

Third Embodiment: In the present embodiment, PdCu alloy membranes having a different $\beta$ phase area percentage were produced while the thermal treatment temperature for $\beta$ phase generation was adjusted for the same PdCu alloy membranes (having a Cu concentration of 39.0 mass%) as in First Embodiment, and the hydrogen permeability coefficients thereof were measured. In the present embodiment as well, similar to Second Embodiment, thermal treatments (at treatment temperatures of 275°C to 375°C) for phase transformation into a $\beta$ phase of the PdCu alloy membranes were performed with the measurement apparatus, and the hydrogen permeability coefficients were then measured. The measurement temperature in hydrogen permeation testing was set to 300°C. In addition, after the measurement of the hydrogen permeability coefficients, the PdCu alloy membranes were taken out, EBSD analysis was performed thereon, and the $\beta$ phase area percentages on the cross sections were measured.

Fig. 7 shows the results of the testing and is a graph showing the relationship between the area percentage of the $\beta$ phase on the cross section and the hydrogen permeability coefficient of the PdCu alloy membrane having a Cu concentration of 39.0 mass%. From Fig. 7, it is found that the hydrogen permeability coefficient increases with an increase in the area percentage of the $\beta$ phase on the PdCu alloy membrane cross section. When the hydrogen permeability coefficient of the conventional PdCu alloy membrane having a Cu concentration of 40 mass%, which is studied in Second Embodiment, is used as a criterion, it was confirmed that, in the present embodiment, the area percentage of the $\beta$ phase needs to be 95% or more and is particularly preferably supposed to be 98% or more.

Fourth Embodiment: In the present embodiment, the relationship between the treatment temperature and the hydrogen permeability coefficient in hydrogen purification was observed. The PdCu alloy membranes (having a Cu concentration of 39.0 mass%) of First Embodiment were set in the measurement apparatus, the testing temperatures were set to 180°C to 600°C, and the hydrogen permeability coefficients were measured. In the present embodiment as well, similar to Second Embodiment, thermal treatments for phase transformation into a $\beta$ phase of the PdCu alloy membranes were performed with the measurement apparatus, and the hydrogen permeability coefficient was then measured at each temperature. The thermal treatment temperature was set to 300°C. In addition, for comparison, the same measurement was performed on the PdCu alloy membrane having a Cu concentration of 40.0 mass% (the thermal treatment temperature was set to 400°C).

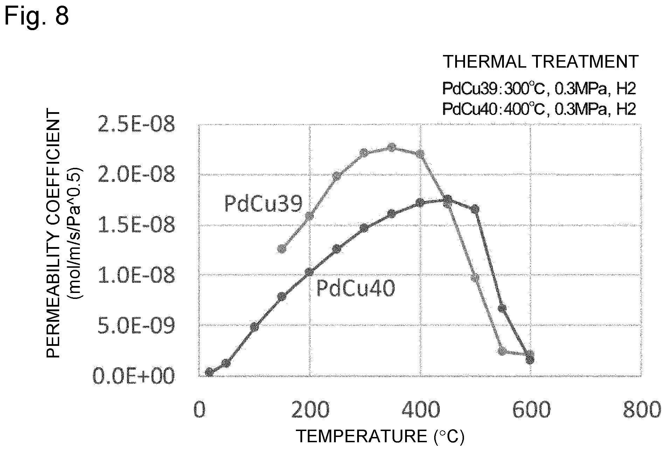

The measurement results are shown in Fig. 8. As the relationship between the treatment temperature and the hydrogen permeability coefficient in hydrogen purification, the hydrogen permeability coefficients of the PdCu alloy membranes (having a Cu concentration of 39.0 mass%) of the present embodiment showed a peak at near 300°C to 350°C. In contrast, for the PdCu alloy membrane (having a Cu concentration of 40.0 mass%) of the conventional example, the peak of the hydrogen permeability coefficients is present at near 400°C. When the present embodiment and the conventional example are compared with each other, it was confirmed that, while the treatment temperatures at which the maximum value of the hydrogen permeability coefficients appeared differ from each other, the PdCu alloy membranes of the present embodiment show equal or higher hydrogen permeability coefficients to or than that of the conventional example at temperatures from 100°C to near 450°C. Particularly, it was confirmed that higher hydrogen permeability coefficients were exhibited in a temperature range of up to near 350°C and those temperatures are more preferably treatment temperatures.

From the results of Second to Fourth Embodiments, it was confirmed that a PdCu alloy membrane having a hydrogen permeability coefficient increased to the maximum can be obtained by providing a composition having a Cu concentration of near 39.0 mass%. It is deemed that this PdCu alloy is capable of obtaining a higher hydrogen permeability coefficient than the PdCu alloy membrane having a Cu concentration of 40.0 mass%, which is the related art, by an appropriate thermal treatment (treatment for phase transformation into a β phase).

Industrial Applicability

The hydrogen permeable membrane including a PdCu alloy of the present invention strictly regulates the composition range to a Cu concentration of 38.75 mass% or higher and 39.5 mass% or lower. In addition, hydrogen permeability is secured by increasing the occupancy of a β phase on the cross section of the hydrogen permeable membrane. The present invention has a high hydrogen permeability coefficient compared with PdCu alloy membranes (having a Cu concentration of 40 mass%), which have been conventionally considered to be optimal. Hydrogen is being expected to be used not only in the chemical synthesis field but also as renewable new energy in recent years. The present invention is capable of contributing to the supply of high-purity hydrogen to such a wide range of fields.

**Claims**

1. A hydrogen permeable membrane, comprising a PdCu alloy,

   wherein the PdCu alloy comprises 38.75 mass% or more and 39.5 mass% or less of Cu with the balance being Pd and inevitable impurities, and
   an area percentage of a β phase on an arbitrary cross section is 95% or more.

2. The hydrogen permeable membrane according to claim 1, wherein the membrane has a thickness of 1 μm or more and 250 μm or less.

3. The hydrogen permeable membrane according to claim 1 or 2, wherein the membrane has a hydrogen permeability coefficient $\phi$ of $2.0 \times 10^{-8}$ mol/m·S·Pa$^{1/2}$ or more at any temperature in a temperature range of 150°C or higher and 350°C or lower.

4. A method for producing the hydrogen permeable membrane defined in any one of claims 1 to 3, the method comprising the steps:

   providing a PdCu alloy membrane including 38.75 mass% or more and 39.5 mass% or less of Cu with the balance being Pd and inevitable impurities; and
   thermally treating the PdCu alloy membrane in a pressurized hydrogen-containing atmosphere at a temperature of 275°C or higher and 350°C or lower.

5. A method for purifying hydrogen by transmitting a gas containing hydrogen through a hydrogen permeable membrane,

   wherein the method uses the hydrogen permeable membrane defined in any one of claims 1 to 3 as the hydrogen permeable membrane, and
   transmits the gas through the hydrogen permeable membrane at a treatment temperature set to 100°C or higher and 375°C or lower.

6. A method for purifying hydrogen by transmitting a gas containing hydrogen through a hydrogen permeable membrane,

   wherein the method provides a PdCu alloy membrane including 38.75 mass% or more and 39.5 mass% or less of Cu with the balance being Pd and inevitable impurities,
   before transmitting the gas containing hydrogen, thermally treats the PdCu alloy membrane in a hydrogen atmosphere at a temperature of 275°C or higher and 350°C or lower to form the hydrogen permeable membrane, and then

transmits the gas through the hydrogen permeable membrane at a treatment temperature set to 100°C or higher and 375°C or lower.

7. A hydrogen production apparatus comprising:

the hydrogen permeable membrane defined in any one of claims 1 to 3; and
a support that supports the hydrogen permeable membrane.

Fig. 1

## Fig. 2

β PHASE

### 275°C

ENTIRE CROSS SECTION
IS β PHASE

β PHASE

### 300°C

ENTIRE CROSS SECTION
IS β PHASE

α PHASE

β PHASE

### 350°C

THIN α PHASE IS PRESENT
IN CENTRAL PORTION OF
CROSS SECTION

α PHASE

α PHASE

β PHASE

### 375°C

α PHASE IS PRESENT
EVERYWHERE IN CROSS
SECTION

## Fig. 3

Fig. 4

Fig. 5

Fig. 6

Fig. 7

Fig. 8

THERMAL TREATMENT
PdCu39: 300°C, 0.3MPa, H2
PdCu40: 400°C, 0.3MPa, H2

## INTERNATIONAL SEARCH REPORT

| | International application No. |
|---|---|
| | **PCT/JP2022/031476** |

**A. CLASSIFICATION OF SUBJECT MATTER**

***C22C 5/04***(2006.01)i; ***B01D 53/22***(2006.01)i; ***B01D 69/02***(2006.01)i; ***B01D 69/10***(2006.01)i; ***B01D 69/12***(2006.01)i; ***B01D 71/02***(2006.01)i; ***C01B 3/56***(2006.01)i; ***C22F 1/00***(2006.01)i; ***C22F 1/14***(2006.01)i; ***H01M 8/0612***(2016.01)i; ***H01M 8/0662***(2016.01)i

FI: C22C5/04; B01D53/22; B01D69/02; B01D69/10; B01D69/12; B01D71/02 500; C01B3/56 Z; C22F1/00 613; C22F1/00 622; C22F1/00 623; C22F1/00 640Z; C22F1/00 641A; C22F1/00 683; C22F1/00 685Z; C22F1/00 691B; C22F1/00 691C; C22F1/00 691Z; C22F1/00 694A; C22F1/14; H01M8/0612; H01M8/0662

According to International Patent Classification (IPC) or to both national classification and IPC

**B. FIELDS SEARCHED**

Minimum documentation searched (classification system followed by classification symbols)

C22C5/04; B01D53/22; B01D69/02; B01D69/10; B01D69/12; B01D71/02; C01B3/56; C22F1/00; C22F1/14; H01M8/0612; H01M8/0662

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | ZHAO, Chenyang et al. Low-temperature stability of body-centered cubic PdCu membranes. Journal of Membrane Science. 27 July 2017, vol. 542, pp. 60-67 table 3, fig. 6 | 1, 2, 5, 7 |
| A | JP 2015-53475 A (NITTO DENKO CORP) 19 March 2015 (2015-03-19) | 1-7 |
| A | JP 2014-198883 A (JX NIPPON MINING & METALS CORP) 23 October 2014 (2014-10-23) | 1-7 |
| A | JP 2013-209729 A (JX NIPPON MINING & METALS CORP) 10 October 2013 (2013-10-10) | 1-7 |
| A | JP 2010-70818 A (TANAKA HOLDINGS KK) 02 April 2010 (2010-04-02) | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 October 2022** | **01 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

17

**INTERNATIONAL SEARCH REPORT**
Information on patent family members

International application No.

**PCT/JP2022/031476**

| Patent document cited in search report | | | Publication date (day/month/year) | Patent family member(s) | | | Publication date (day/month/year) |
|---|---|---|---|---|---|---|---|
| JP | 2015-53475 | A | 19 March 2015 | US | 2016/0181583 | A1 | |
| | | | | WO | 2015/019906 | A1 | |
| | | | | EP | 3031517 | A1 | |
| | | | | TW | 201507245 | A | |
| | | | | CN | 105451865 | A | |
| | | | | KR 10-2016-0041951 | | A | |
| JP | 2014-198883 | A | 23 October 2014 | (Family: none) | | | |
| JP | 2013-209729 | A | 10 October 2013 | (Family: none) | | | |
| JP | 2010-70818 | A | 02 April 2010 | (Family: none) | | | |

Form PCT/ISA/210 (patent family annex) (January 2015)

**REFERENCES CITED IN THE DESCRIPTION**

**Patent documents cited in the description**

- JP 2001262252 A

- JP 2008012495 A

**Non-patent literature cited in the description**

- **JAMES RAPHAEL WARREN.** The Effect of Hydrogen on Palladium-Copper Based Membranes for Hydrogen Purification. *THE UNIVERSITY OF BIRMINGHAM,* 22-29